# EUROPÄISCHE PATENTSCHRIFT

(11) **EP 0 564 781 B1**
(45) Veröffentlichungstag und Bekanntmachung des Hinweises auf die Patenterteilung: **15.11.1995**
(21) Anmeldenummer: 93102080.4
(22) Anmeldetag: 10.02.1993
(51) Int. Cl.: B29C 44/00, C08J 9/18

(54) **Verfahren zur kontinuierlichen Herstellung von Schaumperlen**
Process for the continuous production of foam beads
Procédé pour la fabrication en continu de perles en mousse

(30) Priorität: 09.04.1992 DE 4211972
(43) Veröffentlichungstag der Anmeldung: 13.10.1993
(73) Patentinhaber: HÜLS AKTIENGESELLSCHAFT, 45764 Marl (DE)
(72) Erfinder: Leven, Thomas, Dr., W-5880 Lüdenscheid (DE); Träger, Michael, Dr., W-4358 Haltern (DE); Perl, Horst, W-4370 Marl (DE)

(56) Entgegenhaltungen:
- EP-A- 0 164 855
- EP-A- 0 467 551
- WO-A-91/16970
- DE-A- 3 524 830
- NL-A- 276 067
- US-A- 2 829 117
- DATABASE WPIL Week 8541, Derwent Publications Ltd., London, GB; AN 85-253499 & JP-A-60 168 610 (NIPPON STYRENE PAPER KK) 2. September 1985
- DATABASE WPIL Week 8426, Derwent Publications Ltd., London, GB; AN 84-161340 & JP-A-59 085 724 (NIPPON STYRENE PAPER KK) 17. Mai 1984

## Beschreibung

Gegenstand der vorliegenden Erfindung ist ein kontinuierliches Verfahren zur Herstellung von Schaumperlen aus Polymeren.

Verschiedene Verfahren zur Herstellung von Schaumperlen sind bereits bekannt. So werden in der EP-A-0 053 333 Polymerpartikel zusammen mit einem flüchtigen Treibmittel und einem Dispergiermittel in einem geschlossenen Kessel in Wasser dispergiert und die Dispersion über den Erweichungspunkt des Polymeren hinaus erhitzt, wobei die Polymerpartikel mit dem Treibmittel imprägniert werden. Anschließend wird unter Aufrechterhalten des Drucks im Kessel ein Ende des Kessels geöffnet, wobei der Inhalt unter Aufschäumen der Polymerpartikel in eine Atmosphäre niedrigeren Drucks ausgespritzt wird. Ein ähnliches Verfahren, bei dem füllstoffhaltige Polymerpartikel eingesetzt werden und bei dem auf ein flüchtiges Treibmittel verzichtet werden kann, ist aus der DE-OS 21 55 775 bekannt. Diese Verfahren sind diskontinuierlich und erlauben damit nur eine vergleichsweise geringe Produktionskapazität, da viel Zeit zum Spülen, Füllen und Aufheizen aufgewendet werden muß. Zudem ist es bei diskontinuierlicher Fahrweise schwierig, eine konstante Produktqualität zu erzielen.

Die JP-A-59 067 022 beschreibt ein kontinuierliches Verfahren zur Herstellung von Schaumperlen. Dort wird die Wärmebehandlung in einer Kaskade aus sechs gerührten Reaktoren durchgeführt. Die Anmaischung von Polymer und Dispersionsmittel durchströmt alle Rührkessel und wird in einem Niederdruckraum entspannt, wobei die Polymerteilchen expandieren. Von den sechs Rührkesseln wird einer für die Zugabe eines gasförmigen Treibmittels und einer zum Ausfahren der Dispersion benötigt. In letzterem herrscht ein höherer Druck als in den Kesseln, die der Wärmebehandlung dienen. Alle Reaktoren müssen entsprechend druckstabil ausgelegt sein, was einen erhöhten apparativen Aufwand zur Folge hat. Die Vielzahl von Rührkesseln, Pumpen und Hilfsaggregaten macht ein Investment äußerst unattraktiv.

Gemäß dem Stand der Technik werden die Polymerpartikel während der Wärmebehandlung meist mit einem flüchtigen Treibmittel imprägniert, wobei in der Regel Kohlenwasserstoffe wie Propan, Butan, Pentan, Hexan oder Heptan, alicyclische Kohlenwasserstoffe wie Cyclopentan oder Cyclohexan, halogenierte Kohlenwasserstoffe wie Trichlorfluormethan, Dichlordifluormethan, Dichlortetrafluorethan, Dichlormonofluormethan, Trichlortrifluorethan, Methylchlorid, Ethylchlorid oder Methylenchlorid oder in Sonderfällen anorganische Gase wie Kohlendioxid oder Stickstoff Verwendung finden. Diese Treibmittel werden von den Polymerpartikeln unter Druck gelöst und bei der Entspannung im Niederdruckraum wieder freigesetzt. Aus wirtschaftlichen Gründen, aus Gründen des Umweltschutzes sowie aus sicherheitstechnischen Erwägungen heraus sollte das freigesetzte Treibmittel nach der Entspannung wiedergewonnen und zurückgeführt werden können. Jedoch kann es, wie in der EP-A-0 140 059 für ein diskontinuierliches Verfahren beschrieben, nur mit großem technischen Aufwand aufgefangen werden. Dort werden flüssigkeitsgefüllte Gasometer eingesetzt, um die freiwerdenden großen Gasmengen zu speichern, bis sie für einen erneuten Reaktionsansatz wiederverwendet werden können; im Falle höhersiedender Treibmittel werden diese kondensiert und in flüssiger Form zwischengelagert.

Allen diskontinuierlichen Verfahren ist gemeinsam, daß während des Ausfahrens der Dispersion aus dem Druckkessel durch das Größerwerden des Gasraums im Kessel der Innendruck erniedrigt wird und daher der Expansionsgrad der ausgespritzten Partikel fortlaufend verringert wird. Wie in der EP-A-0 095 109 beschrieben wird, kann dieses Problem nur dadurch gelöst werden, daß durch fortgesetzte Zugabe des Treibmittels während des Ausfahrens dessen Partialdruck konstant gehalten wird. Zudem ist es für die Schaumqualität wichtig, Ein- oder Mehrlochdüsen mit einem bestimmten Lochdurchmesser zu verwenden. Entsprechend verlangt die EP-A-0 234 320, Düsen einzusetzen, bei denen das Verhältnis von Düsenlänge zu Lochdurchmesser 4 - 100 beträgt, da andernfalls Vorschaumperlen mit ungleichmäßigem Zellendurchmesser und Expansionsgrad erhalten werden.

Die Aufgabe bei der vorliegenden Erfindung war demnach, ein apparativ einfaches kontinuierliches Verfahren zur Herstellung von Schaumperlen zu entwickeln, bei dem das Treibmittel ohne den Einsatz großvolumiger Behälter oder Kondensatoren problemlos im Kreis gefahren werden kann, und das ohne aufwendige Verfahrensmaßnahmen die Herstellung von Schaumperlen mit konstanter Qualität gestattet, die insbesondere einen gleichmäßigen Zellendurchmesser sowie einen einheitlichen Expansionsgrad aufweisen.

Diese Aufgabe wird dadurch gelöst, daß Polymerteilchen und ein Dispersionsmittel kontinuierlich einer schlanken, druckbetriebenen, nicht gerührten Stoffaustauschsäule zugeführt und in dieser unter Druck einer Wärmebehandlung ausgesetzt werden, wonach die Dispersion in einen Niederdruckraum ausgespritzt wird, wobei die Polymerteilchen expandieren.

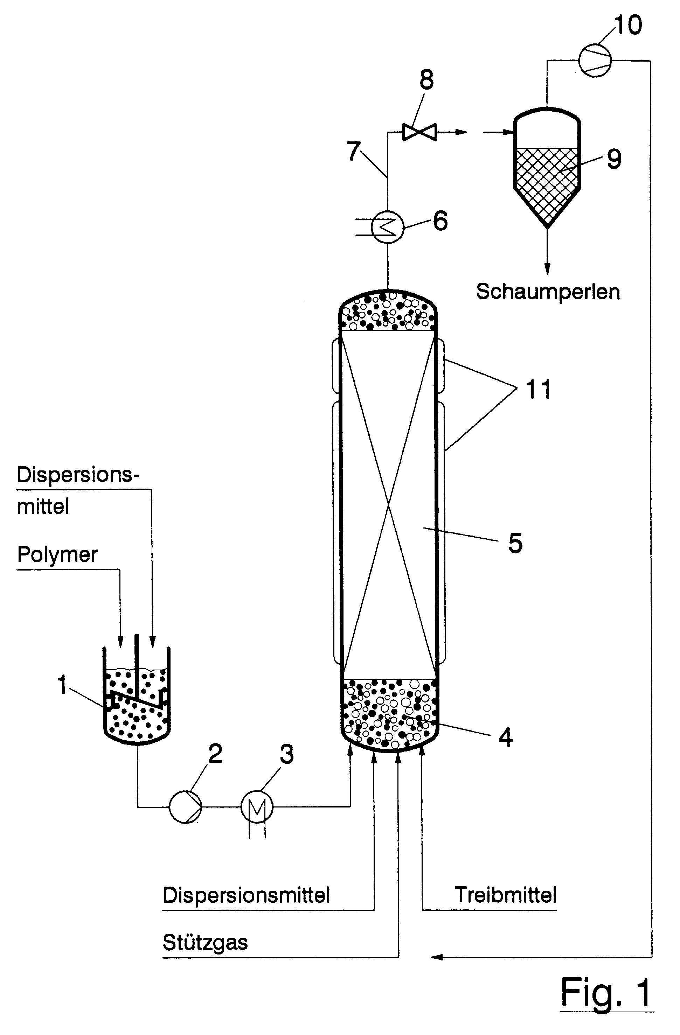

Wie aus Fig. 1 ersichtlich, wird beispielsweise in einem Kessel **1** eine Dispersion als Anmaischung von Polymer in einem Dispersionsmittel hergestellt und kontinuierlich mit Hilfe einer Pumpe **2** einer Stoffaustauschsäule **4** zugeführt. Die Stoffaustauschsäule wird bei einem Druck größer oder gleich dem Dampfdruck des Dispersionsmittels und einer Temperatur oberhalb des Erweichungspunkts des Polymeren, gemessen nach ASTM D 648 (4.6 kg/mm² Last) betrieben. Die Temperaturobergrenze wird durch die Forderung bestimmt, daß die Polymerpartikel nicht so weit erweichen, daß sie aggregieren und damit die Anlage verstopfen; für die jeweiligen Polymeren sind dem Fachmann, der mit den entsprechenden diskontinuierlichen Verfahren vertraut ist, die Obergrenzen geläufig. Diese Temperatur wird entweder über einen Wärmeaustauscher **3** oder über einen Heizmantel **11**, beispielsweise einen mit Flüssigkeit oder Dampf temperierten Doppelmantel, in die Stoffaustauschsäule eingebracht. Der in der Stoffaustauschsäule herrschende Druck beträgt in der Regel maximal 100 bar, jedoch sind bei entsprechender Druckauslegung auch höhere Drücke möglich. Üblicherweise wird bei einem Druck zwischen 5 und 50 bar gearbeitet.

Nach dem Durchgang durch die Stoffaustauschsäule wird die Dispersion, wenn nötig, mit einem Wärmeaustauscher **6** auf die endgültig benötigte Temperatur gebracht und anschließend über eine Drosselvorrichtung **8** entspannt, wobei die Polymerpartikel aufschäumen.

Im Rahmen der vorliegenden Erfindung können beispielsweise folgende Polymere verwendet werden: Polystyrol, Poly-α-methylstyrol, Copolymere von Styrol und Maleinsäureanhydrid oder Maleinsäureimiden, Blends oder Pfropfcopolymere von Polyphenylenoxid und Polystyrol, Copolymere aus Acrylnitril und Styrol, Terpolymere von Acrylnitril, Butadien und Styrol, Copolymere von Styrol und Butadien, schlagzähes Polystyrol, Polyvinylchlorid, Copolymere von Vinylchlorid und Vinylacetat, chloriertes Polyvinylchlorid, Polyamide, Polyester und Polyolefine.

Als Polyolefine sind beispielsweise Propylenpolymere wie Propylen-Ethylen- oder Propylen-Butylen-Randomcopolymere, Random-Terpolymere von Ethylen, Propylen und Buten-1, Ethylen-Propylen-Blockcopolymere und Homopolypropylen, Ethylenpolymere wie Polyethylen niedriger, mittlerer oder hoher Dichte, lineares Polyethylen niedriger Dichte, Ethylen-Vinylacetat-Copolymere, Ethylen-Methylmethacrylat-Copolymere, Ionomere oder andere Polyolefine wie Polybuten-1 geeignet.

Diese Polymeren liegen als diskrete Partikel vor. Sie haben vorzugsweise einen mittleren Teilchendurchmesser von 0,5 bis 5 mm. Um eine gleichmäßige Schäumung zu erzielen, können sie gegebenenfalls, dem Stand der Technik entsprechend, einen Füllstoff enthalten, der als Keimbildner wirkt.

Als Dispersionsmittel wird vorzugsweise Wasser verwendet. Geeignet sind jedoch auch Alkohole wie Methanol oder Ethanol.

Wie beim diskontinuierlichen Verfahren kann der Anmaischung von Polymerteilchen im Dispersionsmittel ein feinteiliges Dispergiermittel und/oder eine oberflächenaktive Verbindung zugesetzt werden. Beispiele hierfür sind Calciumphosphat, basisches Magnesiumcarbonat, basisches Zinkcarbonat, Calciumcarbonat, Aluminiumoxid, Bariumsulfat, Talkum, Alkylbenzolsulfonate, Paraffinsulfonate oder Ethoxylate.

Der Feststoffgehalt der Anmaischung kann zwischen 1 und 60 Gew.-% betragen; vorzugsweise liegt er zwischen 20 und 35 Gew.-%.

Alternativ dazu können die Polymerpartikel und das Dispersionsmittel auch getrennt voneinander kontinuierlich in die Säule eingebracht werden.

Die Stoffaustauschsäule besitzt einen Schlankheitsgrad, d. h. ein Verhältnis von Säulenhöhe zu Säulenquerschnitt, von 3 bis 60. Vorzugsweise beträgt dieses Verhältnis 5 bis 40, wobei ein Verhältnis von 9 bis 25 besonders bevorzugt ist.

Um Schaumperlen gleichmäßiger Konsistenz zu erhalten, muß die Wärmebehandlungsdauer aller Polymerkörner gleich groß sein. Eine gleichlange Verweildauer aller Polymerkörner kann dadurch erreicht werden, daß die Stoffaustauschsäule mit Einbauten **5** versehen ist. Verglichen mit einer Säule ohne Einbauten wird eine gleichmäßige Qualität der Schaumperlen bei wesentlich geringeren Durchsätzen der Anmaischung erreicht, was sich günstig auf die Höhe der Stoffaustauschsäule auswirkt. Die Einbauten können beispielsweise aus eingeschweißten Umlenkblechen bestehen, die jeweils maximal 80 % der Querschnittsfläche der Stoffaustauschsäule einnehmen und wechselseitig im Abstand von mindestens 0,1 mal und maximal 10 mal Innendurchmesser der Stoffaustauschsäule angebracht sind. Die Einbauten können auch aus handelsüblichen Elementen wie z. B. sogenannten statischen Mischern bestehen (z. B. Sulzer SMV oder SMX, Kenics-Mixer). Die Länge einer Zone der Einbauten sollte mindestens das Zweifache des Durchmessers der Stoffaustauschsäule betragen. Der Anteil der Länge der Zonen mit Einbauten an der Gesamtlänge der Stoffaustauschsäule sollte mindestens 0,2 betragen.

Überraschenderweise hat sich gezeigt, daß eine besonders enge Verweilzeitverteilung und damit konstante Schaumqualitäten durch die Verwirbelung des Säuleninhalts mittels Gasblasen erreicht wird. Dazu wird in die Stoffaustauschsäule von unten ein Stützgas eingedüst. Als Stützgas können beliebige inerte Gase wie Stickstoff, Edelgase oder Dampf des Dispersionsmittels verwendet werden. Hierbei sollte der Gasdurchsatz bei Druck und Temperatur der Wärmebehandlung, bezogen auf den Querschnitt der Stoffaustauschsäule, nicht mehr als 0,1 m³/(m² s) betragen. Die besten Ergebnisse werden bei einem bezogenen Durchsatz von 0,004 - 0,03 m³/(m² s) erzielt.

Zur Einstellung der Dichte der Schaumperlen kann es zweckmäßig sein, die Stoffaustauschsäule zusätzlich mit einem flüchtigen Treibmittel zu beaufschlagen. Geeignete Treibmittel sind aus den diskontinuierlichen Verfahren des Standes der Technik bekannt; beispielsweise können gesättigte aliphatische Kohlenwasserstoffe wie Ethan, Propan, n-Butan, i-Butan, Pentan oder Hexan, alicyclische Kohlenwasserstoffe wie Cyclopentan oder Cyclohexan, halogenierte Kohlenwasserstoffe wie Trichlormonofluormethan, Dichlordifluormethan, Dichlortetraflruorethan, Trichlortrifluorethan, Dichlormonofluormethan, Methylchlorid, Methylenchlorid oder Ethylchlorid sowie anorganische Gase wie beispielsweise Kohlendioxid, jeweils einzeln oder als Mischung, verwendet werden. Bei genügender Menge kann ein gasförmig eingesetztes Treibmittel auch die Rolle des Stützgases übernehmen. Andernfalls kann das Treibmittel separat oder zusammen mit dem Stützgas in die Säule eindosiert werden.

Wird kein flüchtiges Treibmittel zugegeben, so wirkt bereits alleine das Dispersionsmittel als Treibmittel. Auf diese Weise werden zwar nur mäßige bis mittlere Expansionsraten erzielt, was aber für viele Anwendungszwecke, z. B. wo ein etwas steiferer Schaum verlangt wird, durchaus erwünscht ist.

Wenn die Endtemperatur vor Ausfahren der Dispersion zur Beeinflussung der Schaumqualität eingestellt werden soll, so kann die entsprechende Temperatur entweder im oberen Teil der Stoffaustauschsäule mit einem separaten Doppelmantel oder direkt in der Ausfahrleitung mit einem Wärmeaustauscher **6** eingestellt werden. Um eine gleichmäßige Zellgröße der Schaumperlen zu erzielen, ist es von Vorteil, wenn sich an den Wärmeaustauscher **6** eine wärmeisolierte Rohrstrecke **7** anschließt, deren Querschnitt mindestens das Dreifache des freien Querschnitts des Wärmeaustauschers und deren Länge mindestens das Zweifache der Länge des Wärmeaustauschers beträgt.

Als Drosselvorrichtung **8** kann eine einfache Einloch-Blende oder Düse verwendet werden. Zur Erzielung einer druckunabhängigen Ausfahrgeschwindigkeit der Polymerkörner ist es jedoch zweckmäßig, ein regelbares Ventil einzusetzen. Es hat sich gezeigt, daß die Qualität der Schaumperlen nicht von der Ausfahrgeschwindigkeit abhängt, wenn im Ventil vor der Vena contracta eine Vorexpansionskammer vorgesehen ist. Diese Vorexpansionskammer ist eine Erweiterung des Strömungskanals im Ventil, so daß ein Volumen entsteht, das eine Verweilzeit des expandierenden Materials von größer als 0,1 Millisekunden, vorzugsweise größer als 0,5 Millisekunden, erlaubt. Mit dieser besonderen Drosselvorrichtung kann der Durchsatz durch die Stoffaustauschsäule und damit die Anlagenkapazität den betrieblichen Erfordernissen angepaßt werden. Auch der Reaktordruck kann, anders als bei der Verwendung üblicher Düsen, unabhängig vom Durchsatz gewählt werden.

Die Dispersion wird durch die Drosselvorrichtung **8** in den Niederdruckraum **9** ausgespritzt, wobei die Polymerpartikel aufschäumen. Eventuell verwendete flüchtige Treibmittel werden hierbei zumindest größtenteils kontinuierlich wieder freigesetzt. Dies bietet die Möglichkeit einer aus wirtschaftlichen Gründen sowie aus Gründen des Umweltschutzes erwünschten Rückführung der flüchtigen Treibmittel sowie des Stützgases. Hierzu kann der Niederdruckraum mit Hilfe eines Kompressors **10** abgesaugt werden. Nach entsprechender Verdichtung können diese Hilfsstoffe der kontinuierlich betriebenen Stoffaustauschsäule wieder zugeführt werden, was eine wesentliche Vereinfachung des Verfahrens bedeutet. Insbesondere sind aufwendige Speicherbehälter überflüssig.

Die geschäumten Polymerpartikel werden anschließend gegebenenfalls gewaschen, um das Dispergiermittel zu entfernen, und dann auf übliche Weise abgetrennt und getrocknet.

Bei Durchführung dieses Verfahrens werden bei der Wasserschäumung Expansionsraten erhalten, die bei Polyolefinen in der Regel im Bereich von 4 bis 15 liegen, während bei Verwendung eines flüchtigen organischen Treibmittels Expansionsraten erhalten werden, die in der Regel zwischen 4 und 40 liegen.

Die geschäumten Polymerpartikel können mit bekannten Methoden zu Formteilen verarbeitet werden. In den dafür verwendeten Maschinen wird der Polymerschaum unter Druck mit Hilfe von Wasserdampf von z. B. 1 - 5 bar aufgeweicht bzw. angeschmolzen, wodurch die einzelnen Schaumpartikel zu einem Formteil verschweißen.

Gegenüber dem Stand der Technik besitzt das erfindungsgemäße Verfahren eine Reihe von Vorteilen. So ermöglicht die kontinuierliche Verfahrensweise eine wesentlich höhere Produktionskapazität, weil Spül-, Füll- und Aufheizzeiten entfallen. Darüber hinaus kann durch die bessere Automatisierbarkeit eine konstantere Produktqualität als bei Chargenfahrweise erzielt werden. Die Stoffaustauschsäule benötigt keine Vorrichtungen zum Rühren der Anmaischung; das Verfahren wird dadurch weniger energieaufwendig. Durch die Schlankheit der Stoffaustauschsäule ist ihre drucksichere Auslegung weniger aufwendig als z. B. bei einem Rührkessel. Im Gegensatz zu einer Kaskade aus mehreren Reaktoren ist hier nur eine einzige Stoffaustauschsäule erforderlich; wegen der geringen Anzahl mechanisch bewegter Teile sind das Investment, die Überwachung und die Wartung zudem wesentlich weniger aufwendig.

## Patentansprüche

1. Verfahren zur Herstellung von Schaumperlen aus Polymeren,
wobei
Polymerteilchen und ein Dispersionsmittel kontinuierlich einer schlanken, druckbetriebenen, nicht gerührten Stoffaustauschsäule zugeführt und in dieser unter Druck einer Wärmebehandlung ausgesetzt werden, wonach die Dispersion in einen Niederdruckraum ausgespritzt und dabei entspannt wird, wobei die Polymerteilchen expandieren.

2. Verfahren gemäß Anspruch 1,
dadurch gekennzeichnet,
daß die Stoffaustauschsäule ein Verhältnis von Säulenhöhe zu Säulenquerschnitt von 3 bis 60, vorzugsweise von 5 bis 40 und besonders bevorzugt von 9 bis 25 besitzt.

3. Verfahren gemäß den Ansprüchen 1 oder 2,
dadurch gekennzeichnet,
daß die Stoffaustauschsäule Einbauten enthält, die wechselseitig mit einem Abstand von mindestens 0,1 mal und maximal 10 mal Innendurchmesser der Stoffaustauschsäule angebracht sind, wobei sie jeweils maximal 80 % des Rohrquerschnitts abdecken.

4. Verfahren gemäß den Ansprüchen 1 oder 2,
dadurch gekennzeichnet,
daß die Stoffaustauschsäule statische Mischer enthält.

5. Verfahren gemäß den Ansprüchen 3 oder 4,
dadurch gekennzeichnet,
daß die Länge einer Zone der Einbauten mindestens das Zweifache des Durchmessers der Stoffaustauschsäule beträgt, wobei der Anteil der Länge der Zonen mit Einbauten an der Gesamtlänge der Stoffaustauschsäule mindestens 0,2 beträgt.

6. Verfahren gemäß einem der vorhergehenden Ansprüche,
dadurch gekennzeichnet,
daß in die Stoffaustauschsäule von unten ein Stützgas eingedüst wird, wobei der Gasdurchsatz, bezogen auf den Querschnitt der Stoffaustauschsäule, bevorzugt nicht mehr als 0,1 m³/(m² s) und besonders bevorzugt 0,004 - 0,03 m³/(m² s) beträgt.

7. Verfahren gemäß einem der vorhergehenden Ansprüche,
dadurch gekennzeichnet,
daß die Stoffaustauschsäule zusätzlich mit einem flüchtigen Treibmittel beaufschlagt wird.

8. Verfahren gemäß einem der vorhergehenden Ansprüche,
dadurch gekennzeichnet,
daß die Entspannung der Dispersion mit einem regelbaren Ventil durchgeführt wird, wobei vorzugsweise im Ventil vor der Vena contracta eine Vorexpansionskammer vorgesehen ist derart, daß dort der Strömungskanal erweitert ist, so daß ein Volumen entsteht, das eine Verweilzeit des expandierenden Materials von größer als 0,1 Millisekunden, vorzugsweise größer als 0,5 Millisekunden, erlaubt.

9. Verfahren gemäß einem der vorhergehenden Ansprüche,
dadurch gekennzeichnet,
daß die im Niederdruckraum anfallenden gasförmigen Anteile über einen Kompressor angesaugt und der Stoffaustauschsäule wieder zugeführt werden.

## Claims

1. A process for the production of foam heads from polymers, where polymer particles and a dispersion medium are fed continuously to a slim, pressure-operated, unstirred material-exchange column and are subjected therein to heat treatment under pressure, after which the dispersion is sprayed out into a low-pressure space and thus depressurized, whereupon the polymer particles expand.

2. A process according to claim 1, characterized in that the material-exchange column has a height : cross-section ratio of from 3 to 60, preferably from 5 to 40, particularly preferably from 9 to 25.

3. A process according to claim 1 or 2, characterized in that the material-exchange column contains internals mounted on alternate sides at a separation of from at least 0.1 times to a maximum of 10 times the internal diameter of the material-exchange column, each of the internals covering a maximum of 80% of the tube cross-section.

4. A process according to claim 1 or 2, characterized in that the material-exchange column contains static mixers.

5. A process according to claim 3 or 4, characterized in that the length of a zone of the internals is at least twice the diameter of the material-exchange column, where the ratio of the length of the zones containing internals to the total length of the material-exchange column is at least 0.2.

6. A process according to any one of the preceding claims, characterized in that a supporting gas is injected into the material-exchange column from below, the gas throughput, based on the cross-section of the material-exchange column, being preferably not more than 0.1 m³/(m² s) and particularly preferably 0.004 - 0.03 m³/(m² s).

7. A process according to any one of the preceding claims, characterized in that the material-exchange column is additionally charged with a volatile blowing agent.

8. A process according to any one of the preceding claims, characterized in that the depressurization of the dispersion is carried out by means of an adjustable valve, a pre-expansion chamber preferably being provided in the valve for the Vena contracta in such a way that the flow channel is expanded at this point, forming a volume which allows a residence time of the expanding material of greater than 0.1 millisecond, preferably greater than 0.5 millisecond.

9. A process according to any one of the preceding claims, characterized in that the gaseous components arising in the low-pressure space are drawn in via a compressor and fed back to the material-exchange column.

## Revendications

1. Procédé pour préparer des perles de mousse à partir de polymères,
dans lequel on introduit en continu des particules de polymères et un dispersant dans une colonne d'échange de matière, allongée, exploitée sous pression, sans agitation, et, sous pression, on les soumet dans cette colonne à un traitement thermique, après lequel la dispersion est projetée dans une chambre sous basse-pression et y est détendue, ce qui provoque l'expansion des particules de polymère.

2. Procédé selon la revendication 1,
caractérisé par le fait que la colonne d'échange de matière présente entre sa hauteur et sa section transversale un rapport de 3 à 60, de préférence de 5 à 40 et tout particulièrement de 9 à 25.

3. Procédé selon les revendications 1 ou 2,
caractérisé par le fait que la colonne d'échange de matière contient des éléments intérieurs, qui sont disposés alternativement à une distance d'au moins 0,1 fois et au maximum 10 fois le diamètre intérieur de la colonne d'échange de matières, en recouvrant dans chaque cas au plus 80 % de la section transversale du tube.

4. Procédé selon les revendications 1 ou 2,
caractérisé par le fait que la colonne d'échange de matière contient des mélangeurs statiques.

5. Procédé selon les revendications 3 ou 4,
caractérisé par le fait que la longueur d'une zone des éléments intérieurs est au moins égale au double du diamètre de la colonne d'échange de matière, le rapport entre la longueur des zones comportant des éléments intérieurs et la longueur totale de la colonne d'échange de matière étant d'au moins 0,2.

6. Procédé selon l'une des revendications précédentes,
caractérisé par le fait qu'on injecte par en bas, dans la colonne d'échange de matière, un gaz auxiliaire, le débit du gaz, rapporté à la section transversale de la colonne d'échange de matière, n'étant de préférence pas supérieur à 0,1 m³/(m² s), et étant d'une manière particulièrement préférée de 0,004 à 0,03 m³/(m² s).

7. Procédé selon l'une des revendications précédentes,
caractérisé par le fait qu'en outre un agent d'expansion volatil est introduit dans la colonne d'échange de matière.

8. Procédé selon l'une des revendications précédentes,
caractérisé par le fait que la détente de la dispersion est réalisée à l'aide d'une vanne réglable, auquel cas on prévoit de préférence, dans la vanne, en amont de la veine contractée, une chambre de pré-expansion, de façon que le canal d'écoulement y subisse un évasement, ce qui forme un volume qui assure à la matière expansée un temps de séjour supérieur à 0,1 milliseconde et de préférence supérieur à 0,5 milliseconde.

9. Procédé selon l'une des revendications précédentes,
caractérisé par le fait que les fractions gazeuses apparaissant dans la chambre sous basse-pression sont aspirées par l'intermédiaire d'un compresseur, et sont renvoyées à la colonne d'échange de matière.
